# EUROPEAN PATENT APPLICATION

(11) **EP 1 757 512 A1**
(43) Date of publication of application: **28.02.2007**
(21) Application number: 05727852.5
(22) Date of filing: 29.03.2005
(51) Int. Cl.: B62D 5/10, B62D 5/22, B62D 3/12

(54) **STEERING DEVICE AND METHOD OF MANUFACTURING THE SAME**

(30) Priority: 02.04.2004 JP 2004110352
(71) Applicant: JTEKT Corporation, Chuo-ku, Osaka-shi Osaka 542-8502 (JP)
(72) Inventor: TOSHIMA, Akihiro c/o JTEKT Corporation, Osaka-shi Osaka 5428502 (JP); TANAKA, Ryo c/o JTEKT Corporation, Osaka-shi Osaka 5428502 (JP); TAKAKI, Kazuhiko c/o JTEKT Corporation, Osaka-shi Osaka 5428502 (JP)
(74) Representative: Selting, Günther
(86) International application number: PCT/JP2005/005944
(87) International publication number: WO 2005/095179

(57) **Abstract**

An annular recess 73 is provided in a fitting hole 71 of a bracket 7 into which a cylinder tube 53 of a housing is fitted that accommodates a steering drive shaft capable of moving in right and left directions of a car body in response to a steering operation and that has the cylinder tube 53 made of metal, while a part of the cylinder tube 53 ranging from an inner periphery surface to an outer periphery surface is bent into said recess 73, so that an escape preventing protrusion 8 is provided, thereby increasing an escape preventing strength of the bracket 7. This increases the escape preventing strength of the bracket joined to the cylinder tube, without generation of thermal distortion in the cylinder tube. Further, the components such as the steering drive shaft can be assembled without disturbance from said bracket.

## Description

### TECHNICAL FIELD

The present invention relates to: a steering apparatus including a steering drive shaft capable of moving in the right and left directions of a car body in response to a steering operation; and a manufacturing method of the same.

### BACKGROUND ART

As a form of a steering apparatus for an automobile, a rack-and-pinion steering apparatus is known that comprises: a rack shaft that moves in the right and left directions of a car body in conjunction with a pinion shaft that rotates in response to a steering operation; a rack housing that accommodates and supports the rack shaft; a hydraulic cylinder that guides a piston rod linked to an end of said rack shaft and a piston of the piston rod and that has a cylinder tube linked to an end of said rack housing; and first and second brackets that attach the other end of said rack housing and a tip part of said cylinder tube to a car body, wherein operation of a steering mechanism in response to a steering operation is assisted by an hydraulic force generated by said hydraulic cylinder, so that a labor load to an operator in the steering is reduced (see, for example, Japanese Utility Model Application Laid-Open No. H3-7070 (1991)).

The first bracket of this conventional steering apparatus is formed integrally with the rack housing made of aluminum. The second bracket is fitted outside the cylinder tube made of iron, and then joined by spot welding. Alternatively, the second bracket is joined by casting to an outer periphery part of the cylinder tube in which knurl and three protrusions are provided in advance in an outer periphery part.

Further, in other known forms of a steering apparatus, without casting of the second bracket, a separately formed bracket is press-fit onto an outer periphery part of the cylinder tube so that they are joined to each other. Alternatively, after the bracket is joined by press fit, a nut member is screwed at an end of the cylinder tube so that the bracket is pinched between the nut member and a part of the cylinder tube.

In the steering apparatus in which the bracket is welded to or cast with the cylinder tube as in Japanese Utility Model Application Laid-Open No. H3-7070 (1991), the escape preventing strength of the second bracket is increased. Nevertheless, the heat at the time of welding of the second bracket and the heat at the time of casting cause thermal distortion in the cylinder tube. Thus, after the joining of the bracket, the inner periphery part of the cylinder tube need be reworked. This causes the problem of an increase in the work process. Further, since the inner periphery part of the cylinder tube need be reworked after the joining of the bracket, the bracket need be joined at a step before the assembling step for the components such as the steering drive shaft. This causes a problem that said bracket disturbs at the time of assembling of the components such as the steering drive shaft. This problem has been desired to be resolved.

Further, the steering apparatus in which the bracket is joined by press-fit has a problem that an escape preventing strength is not obtained that is comparative to the value of the apparatus in which protrusions for escape prevention are provided as in Japanese Utility Model Application Laid-Open No. H3-7070 (1991). Further, the steering apparatus that employs a nut member has the problem of an increase in the number of components.

### DISCLOSURE OF THE INVENTION

The present invention has been devised in view of this situation. A main object is to provide: a steering apparatus in which the escape preventing strength of a bracket joined to a metal tube part of a housing is increased without generation of thermal distortion in the metal tube part; and a manufacturing method of the same. Further, another object is to provide a steering apparatus in which components such as a steering drive shaft can be assembled without disturbance from the bracket so that assembling workability is improved; and a manufacturing method of the same.

A steering apparatus according to a first aspect is characterized by a steering apparatus comprising: a steering drive shaft capable of moving in right and left directions of a car body in response to a steering operation; a housing accommodating the steering drive shaft and having a metal tube part; and a bracket having a fitting hole into which said metal tube part is fitted and attaching said housing to the car body, wherein said bracket has a recess in said fitting hole, and said metal tube part has an escape preventing protrusion bent into said recess.

In the first aspect, a recess is provided in the fitting hole of the bracket into which the metal tube part is fitted. Then, an escape preventing protrusion formed by bending the metal tube part enters into said recess. This provides a comparatively large escape preventing strength without generation of thermal distortion in the metal tube part. Further, said escape preventing protrusion can be provided from a space between the peripheral surface of the steering drive shaft and the inner periphery surface of said metal tube part after the components such as the steering drive shaft are assembled into the housing having the metal tube part. This allows the components such as the steering drive shaft to be assembled without disturbance from the bracket, and hence improves assembling workability.

A steering apparatus according to a second aspect is characterized by the steering apparatus of the first aspect, wherein said recess is a circular groove.

In the second aspect, when the metal tube part is bent into the recess, the length of the escape preventing protrusion in the circumferential direction, that is, the amount of engagement of the escape preventing protrusion with the recess can be adjusted. Thus, a steering apparatus having a different escape preventing strength can easily be obtained.

A method of manufacturing a steering apparatus according to a third aspect is characterized by a method of manufacturing a steering apparatus provided with a steering drive shaft capable of moving in right and left directions of a car body in response to a steering operation and with a housing accommodating the steering drive shaft and having a metal tube part, comprising: a fitting step of fitting said metal tube part into a fitting hole of a bracket provided with said fitting hole into which said metal tube part is fitted and which has a recess in an inner side thereof and with an attached part attached to the car body; and a step of pressing said metal tube part outward in a radial direction from an inner side of the metal tube part after the fitting step, and thereby bending a part of said metal tube part into said recess.

In the third aspect, after the bracket having a recess in an inner side of a fitting hole is fitted into the metal tube part of the housing, the metal tube part is pressed outward in the radial direction so that a part of the metal tube part is bent into said recess. This provides a comparatively large escape preventing strength without generation of thermal distortion in the metal tube part. Further, said escape preventing protrusion can be provided from a space between the peripheral surface of the steering drive shaft and the inner periphery surface of said metal tube part after the components such as the steering drive shaft are assembled into the housing having the metal tube part. This allows the components such as the steering drive shaft to be assembled without disturbance from the bracket, and hence improves assembling workability.

According to the first aspect and the third aspect, a comparatively large escape preventing strength is obtained without generation of thermal distortion in the metal tube part. Further, the components such as the steering drive shaft can be assembled without disturbance from the bracket. This improves assembling workability.

According to the second aspect, a steering apparatus having a different escape preventing strength can easily be obtained.

### BRIEF DESCRIPTION OF THE DRAWINGS

FIG. 1 is a partly broken front view showing a configuration of a steering apparatus according to the present invention;
FIG. 2 is an expanded sectional view of a main part;
FIG. 3 is a sectional view taken along line III-III of FIG. 2;
FIG. 4 is an explanatory diagram showing a process step of forming an escape preventing protrusion;
FIG. 5 is an explanatory diagram showing another method of forming an escape preventing protrusion;
FIG. 6 is an explanatory diagram showing yet another method of forming an escape preventing protrusion; and
FIG. 7 is an explanatory diagram showing yet another method of forming an escape preventing protrusion.

### EXPLANATION OF CODES

- 3: steering drive shaft
- 4: housing
- 53: cylinder tube (metal tube part)
- 7: bracket
- 71: fitting hole
- 72: through hole (attached part)
- 73: recess
- 8: escape preventing protrusion

### BEST MODE FOR CARRYING OUT THE INVENTION

The present invention is described below in detail with reference to the drawings showing the embodiments.

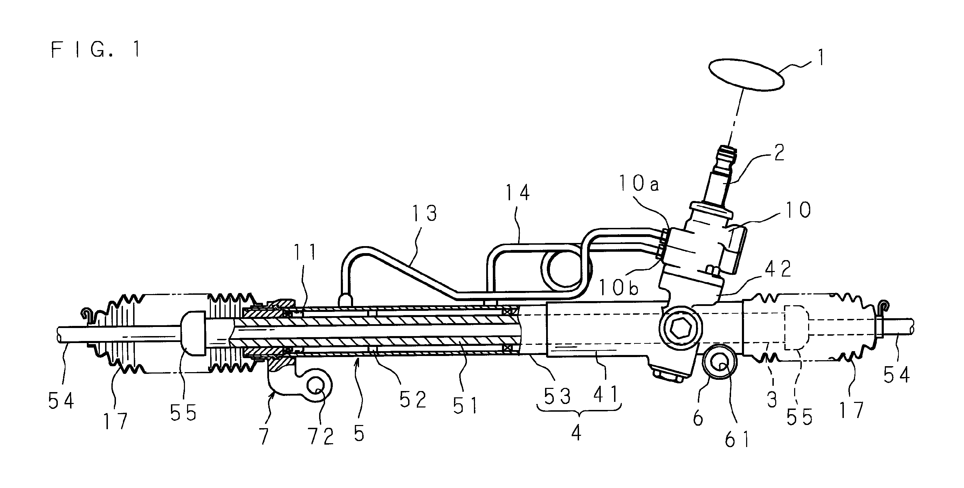

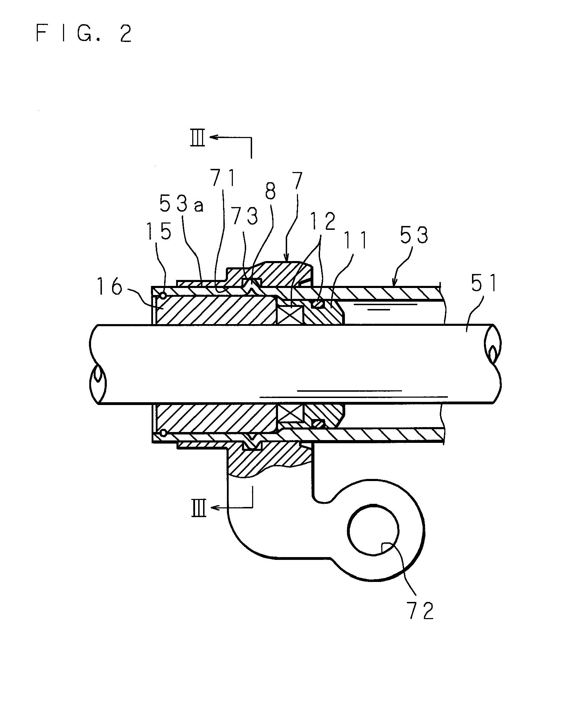

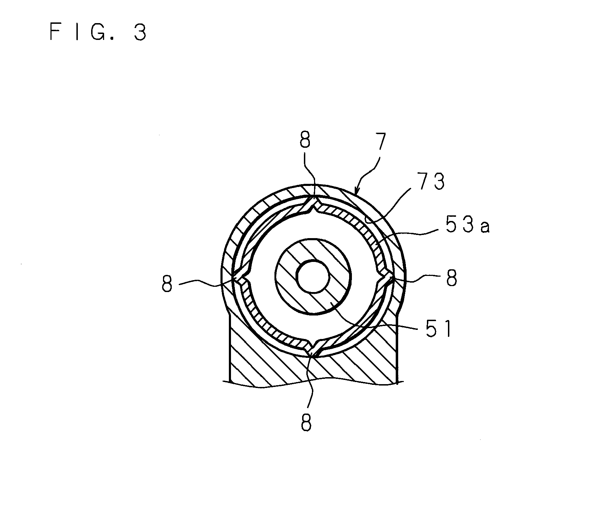

FIG. 1 is a partly broken front view showing a configuration of a steering apparatus according to the present invention. FIG. 2 is an expanded sectional view of a main part. FIG. 3 is a sectional view taken along line III-III of FIG. 2.

The rack-and-pinion steering apparatus shown in FIG. 1 comprises: a transmission shaft 2 an end of which is linked to a steering wheel 1 via an universal joint and a steering shaft and the other end of which is provided with a pinion; a steering drive shaft 3 provided with rack teeth (not shown) that engage with said pinion and capable of moving in the right and left directions of a car body; a cylindrical rack housing 41 that accommodates and supports the steering drive shaft 3 in a freely movable manner; and a hydraulic cylinder 5 that guides a piston rod 51 linked coaxially to an end of the steering drive shaft 3 and a piston 52 of the piston rod 51 and that has an iron cylinder tube 53 linked to an end of the rack housing 41. Here, the rack housing 41 and the cylinder tube 53 constitute a housing 4. Further, the cylinder tube 53 constitutes a metal tube part.

The steering drive shaft 3 is supported in a manner freely movable in the axial directions by a rack yoke (not shown) installed inside in the vicinity of the transmission shaft 2 of the rack housing 41 and by a bearing member 11 fitted inside at a tip part of the cylinder tube 53. In the bearing member 11, a sealing member 12 such as an oil seal and an O-ring is held.

The rack housing 41 is formed by an injection molding machine, and is made of aluminum. At the other end of the rack housing 41, a first bracket 6 that has a through hole 61 is protruded integrally. Further, in the vicinity of the bracket 6, a pedestal part 42 is provided to which a shaft supporting housing 10 is attached for accommodating and supporting the transmission shaft 2.

A joining part 53a is provided in an outer periphery surface of the tip part of the cylinder tube 53, while a second bracket 7 is joined to the joining part 53a.

The second bracket 7 is composed of a metal molded member that has a fitting hole 71 into which the joining part 53a is fitted and a through hole 72 drilled in a direction intersecting the axis of the fitting hole 71. The through hole 72 portion serves as an attached part that is attached to a car body.

In the inside of the fitting hole 71, a recess 73 composed of a circular groove is provided. Into the inside of the recess 73, an escape preventing protrusion 8 is fitted that is formed by bending a part of the joining part 53a of the cylinder tube 53. The escape preventing protrusion 8 prevents the bracket 7 from escaping. Here, the fitting hole 71 has a dimensional tolerance that permits fit-in of the joining part 53a without press-fit. Instead, a dimensional tolerance may be adopted that requires press-fit of the joining part 53a.

In the hydraulic cylinder 5, a pair of oil chambers sealed liquid-tightly with sealing members 12 on both sides of the piston 52 are formed inside the cylinder tube 53. A pressure differential generated on both sides of the piston 52 in response to oil pressure feeding to these oil chambers from the outside pushes and pulls the piston rod 51 in the axial directions, so that a movement force in the axial directions is applied to the steering drive shaft 3 linked to the piston rod 51. Further, the other end of the steering drive shaft 3 and the other end of the piston rod 51 are linked to tire wheels via tie rods 54 and 54.

The oil chambers on both sides of the piston 52 are connected respectively to a pair of oil feed ports 10a and 10b provided outside the shaft supporting housing 10, via oil feed pipes 13 and 14 respectively connected to appropriate positions outside the cylinder tube 53.

The shaft supporting housing 10 incorporates a publicly known oil pressure regulating valve that performs feeding and discarding operations for the oil pressure depending on a steering torque applied to said transmission shaft 2 in response to a steering wheel operation for steering, and that feeds the oil pressure to either of said oil feed ports 10a and 10b. Thus, the feeding oil pressure to the oil feed ports 10a and 10b is fed to the hydraulic cylinder 5 via the oil feed pipes 13 and 14. Then, a hydraulic force generated in response to this feeding is applied to the steering drive shaft 3 so that steering is assisted as described above.

In the steering apparatus having the above-mentioned configuration, the piston rod 51 and the bearing member 11 joined to an end of the steering drive shaft 3 are inserted into the cylinder tube 53, and then the steering drive shaft 3 and the rack yoke are inserted into the rack housing 41, so that the piston rod 51 and the steering drive shaft 3 are accommodated and supported in the housing 4. After that, the joining part 53a of the cylinder tube 53 is pressed fit in the fitting hole 71 of the second bracket 7, and then a part of the joining part 53a of the cylinder tube 53 is pressed outward in the radial direction from the inner side, so that a part of the joining part 53a is bent into the recess 73 of the bracket 7. As a result, the escape preventing protrusion 8 is formed so that the bracket 7 is joined to the cylinder tube 53.

As such, since the escape preventing protrusion 8 is formed by bending a part of the joining part 53a of the cylinder tube 53, a comparatively large escape preventing strength is obtained without generation of thermal distortion in the cylinder tube 53. Thus, even when a comparatively large axis-directional load is applied from the tire wheels to the rack housing 41 and the cylinder tube 53 via the piston rod 51 and the steering drive shaft 3, the bracket 7 is prevented from escaping, so that the joined state of the bracket 7 is maintained. Further, since the escape preventing protrusion 8 is provided after the components such as the steering drive shaft 3 are assembled, the components such as the steering drive shaft 3 can be assembled without disturbance from the bracket 7. This improves assembling workability. Further, since a part of the cylinder tube 53 is bent after the press-fit of the bracket 7 into the joining part 53a, the escape preventing strength of the bracket 7 can be increased without an increase in the number of components.

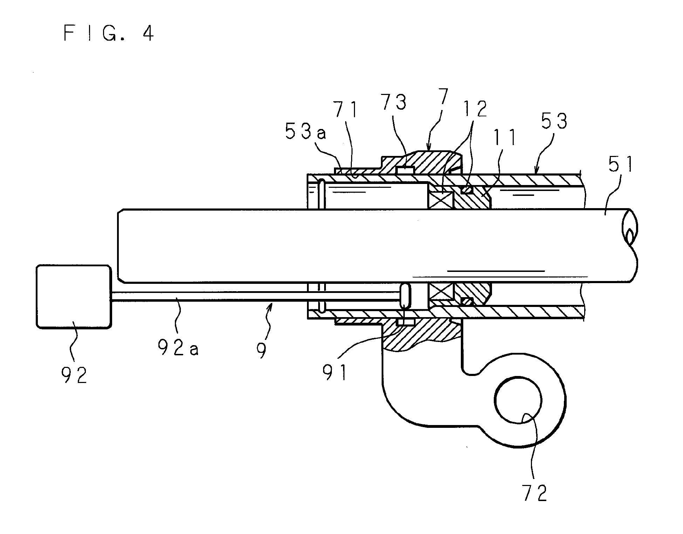

FIG. 4 is an explanatory diagram showing a process step of forming an escape preventing protrusion. The escape preventing protrusion 8 is formed using a bending jig 9 comprising: a roll 91 having a size capable of being inserted in a space between the peripheral surface of the steering drive shaft 3 and the inner periphery surface of the cylinder tube 53; and an electric motor 92 having an output shaft 92a joined to the roll 91.

The electric motor 92 of the bending jig 9 is arranged outward in an axial direction of the cylinder tube 53. After the roll 91 is inserted into said space, in a state that the roll 91 is revolved by the electric motor 92, the bending jig 9 is moved in the radial direction of the cylinder tube 53 so that the roll 91 is pushed against the inner periphery surface of the joining part 53a. This causes plastic deformation in a part of the joining part 53a and thereby bends that part into the recess 73, so that one escape preventing protrusion 8 is formed. Then, the position of the bending jig 9 in the circumferential direction is changed relative to the cylinder tube 53 so that a plurality of escape preventing protrusions 8 are formed sequentially at positions separated in the circumferential direction (see FIG. 3).

Here, when the bending jig 9 or the cylinder tube 53 is revolved in a state that the bending jig 9 is moved in the radial direction of the cylinder tube 53, the entire circumference of the joining part 53a can be bent into the recess 73. Thus, the escape preventing protrusion 8 can be formed in an annular or arc shape. As such, the length of the escape preventing protrusion 8 in the circumferential direction can be adjusted so that the amount of engagement of the escape preventing protrusion 8 with the recess 73 can be adjusted. Thus, a steering apparatus having a different escape preventing strength can easily be obtained.

After the bracket 7 is joined to the cylinder tube 53 as described above, a circlip 15 having an approximate C shape is fitted onto the outer periphery part thereof. Then, a regulation cylinder 16 for controlling the amount of movement of the steering drive shaft 3 in one axial direction is fitted into said space. The tie rods 54 and 54 are linked to the steering drive shaft 3 and the piston rod 51 via the ball joint 55. An end of each of bellows 17 and 17 is fitted onto and linked to the circumference of the fitting hole 71 of the bracket 7 or the other end of the rack housing 41. Further, the shaft supporting housing 10 that incorporates the transmission shaft 2 and the oil pressure regulating valve is attached to the pedestal part 42. Then, the oil feed pipes 13 and 14 are connected.

In the embodiment described above, a recess 73 composed of a circular groove has been provided. Instead, recesses 73 may be provided at a plurality of positions in the circumferential direction. In this case, escape preventing protrusions 8 bent into the recesses 73 reliably prevent relative rotation between the bracket 7 and the cylinder tube 53.

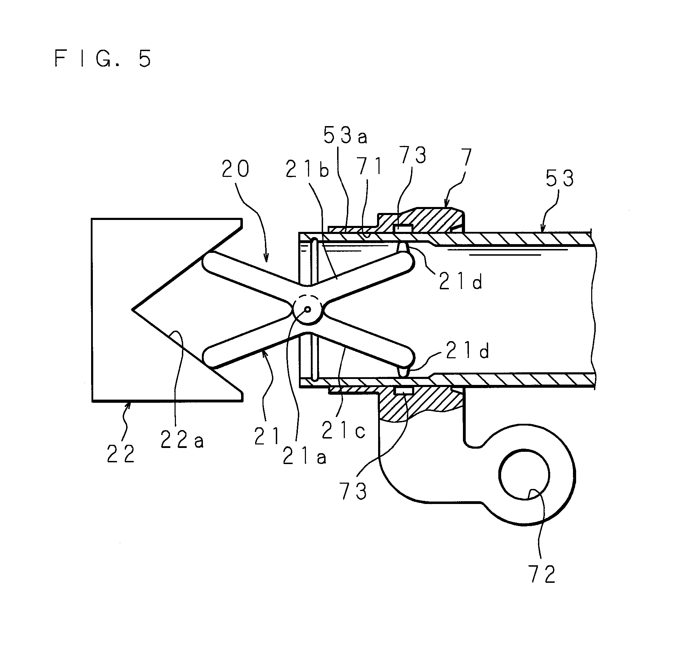

FIG. 5 is an explanatory diagram showing another method of forming an escape preventing protrusion. In this method, a bending jig 20 is used that comprises: an approximately X-shaped swinging member 21 provided with two arms 21b and 21c which are bent into an approximate V shape and the bent parts of which are linked to each other by a pivot shaft 21a, and with forming protrusions 21d and 21d each protruding at an end of each of arms 21b and 21c in a direction that the arms 21b and 21c should be separated from each other; and an approximately V-shaped pressing member 22 provided with a cam 22a that contacts with the other end of each of the arms 21b and 21c. Then, when in a state that the forming protrusions 21d and 21d of the swinging member 21 are inserted into the joining part 53a, the pressing member 22 is pressed in the direction of the swinging member 21, each of the arms 21b and 21c are swung in a direction that the forming protrusions 21d and 21d separate from each other, so that each of the forming protrusions 21d and 21d are pressed against the inner periphery surface of the joining part 53a. This causes plastic deformation in a part of the joining part 53a and thereby bends that part into the recess 73, so that two escape preventing protrusions 8 are formed. Then, when the position of the swinging member 21 in the circumferential direction is changed relative to the joining part 53a, a plurality of escape preventing protrusions 8 are formed at positions separated in the circumferential direction.

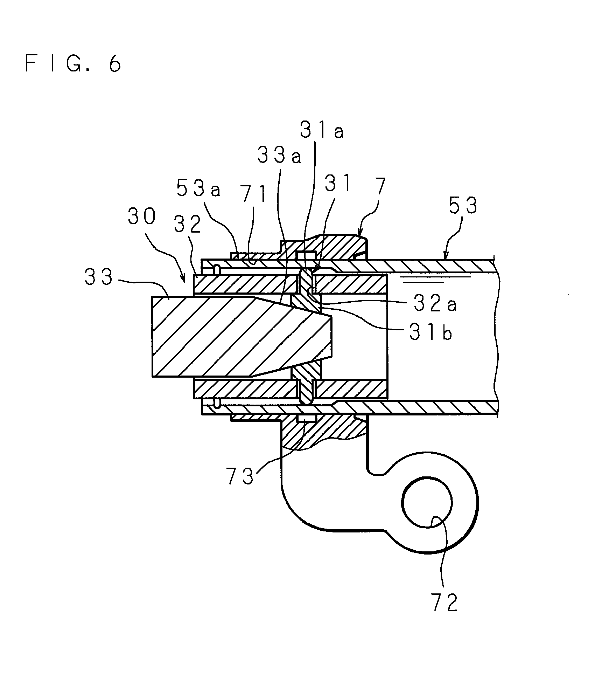

FIG. 6 is an explanatory diagram showing yet another method of forming an escape preventing protrusion. In this method, a bending jig 30 is used that comprises: a holding tube 32 that holds forming protrusions 31 in a manner freely movable in the radial direction at a plurality of positions in the circumferential direction; and a pressing member 33 that is inserted into the holding tube 32 and that has a cam 33a engaging with each of the forming protrusions 31. Then, the holding tube 32 is inserted into the joining part 53a. Then, when in a state that the pressing member 33 is inserted into the holding tube 32, the pressing member 33 is pressed in the insertion direction, each of the forming protrusions 31 is moved outward in the radial direction of the holding tube 32 so that the inner periphery surface of the joining part 53a is pressed against. This causes plastic deformation in a part of the joining part 53a and thereby bends that part into the recess 73, so that a plurality of escape preventing protrusions 8 are formed. Then, when with moving the pressing member 33 in the pull-out direction, the holding tube 32 is pulled out, each of the pressing members 31 retreats. Here, the holding tube 32 is provided with through holes 32a for accommodating the forming protrusions 31 at a plurality of positions in the circumferential direction. Further, each forming protrusion 31 comprises: a pin part 31a inserted into each through hole 32a in a freely movable manner; and a pressure receiving part 31b having an inclined surface that is inclined in a direction intersecting the moving direction of the pin part 31a and that contacts with the cam 33a.

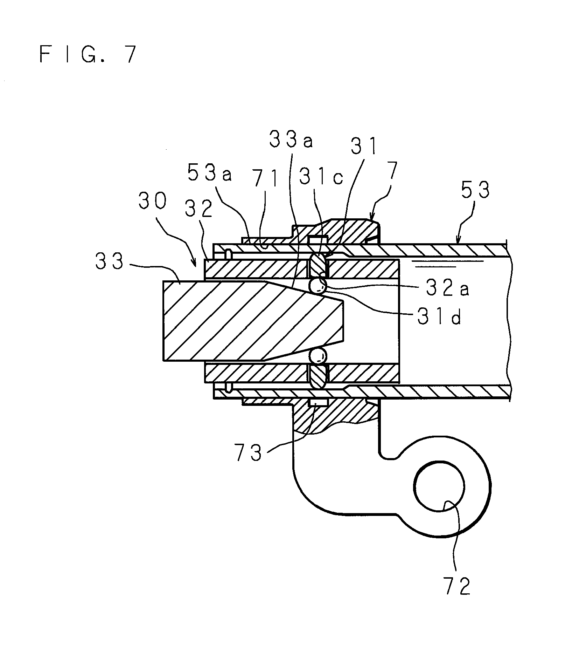

FIG. 7 is an explanatory diagram showing yet another method of forming an escape preventing protrusion. In this method, each forming protrusion 31 of the bending jig 30 shown in FIG. 6 is constructed from: a pin 31c held in each through hole 32a of the holding tube 32 in a freely movable manner; and a ball 31d for pressing the pin 31c. Then, each ball 31d is engaged with the cam 33a of the pressing member 33. The other points of configuration and operation are the same as those of FIG. 6. Thus, like components are designated by like codes, and hence their detailed explanation and the explanation of operation and effect are omitted.

In the present invention, the step of forming the escape preventing protrusion 8 may be performed after the assembling of the components such as the steering drive shaft 3 as shown in FIG. 4, or alternatively may be performed before the assembling of the components such as the steering drive shaft 3.

Further, the embodiments described above have been given for the case of a rack-and-pinion steering apparatus. Instead, the present invention may be applied to a steering apparatus in which an electric motor for steering assistance is provided in the middle of a steering drive shaft 3, or alternatively to a steering apparatus in which an electric motor for steering assistance is provided in the middle of a steering shaft that rotates in response to the operation of a steering wheel.

In addition to the application to an automobile, the present invention is applicable also to a work machine of agriculture use for example.

## Claims

1. A steering apparatus comprising: a steering drive shaft capable of moving in right and left directions of a car body in response to a steering operation; a housing accommodating the steering drive shaft and having a metal tube part; and a bracket having a fitting hole into which said metal tube part is fitted and attaching said housing to the car body, **characterized in that**
said bracket has a recess in said fitting hole, and
said metal tube part has an escape preventing protrusion bent into said recess.

2. The steering apparatus according to claim 1, wherein said recess is a circular groove.

3. A method of manufacturing a steering apparatus provided with a steering drive shaft capable of moving in right and left directions of a car body in response to a steering operation and with a housing accommodating the steering drive shaft and having a metal tube part, **characterized by** comprising:
a fitting step of fitting said metal tube part into a fitting hole of a bracket provided with said fitting hole into which said metal tube part is fitted and which has a recess in an inner side thereof, and with an attached part attached to the car body; and
a step of pressing said metal tube part outward in a radial direction from an inner side of the metal tube part after the fitting step, and thereby bending a part of said metal tube part into said recess.
